# EUROPÄISCHE PATENTSCHRIFT

(11) **EP 0 498 405 B1**
(45) Veröffentlichungstag und Bekanntmachung des Hinweises auf die Patenterteilung: **17.07.1996**
(21) Anmeldenummer: 92101930.3
(22) Anmeldetag: 05.02.1992
(51) Int. Cl.: H02G 3/08, H01R 25/00

(54) **Elektrischer Anschluss einer Kanal-Elektrodosenkombination**
Electrical joint for duct-outlet combination
Raccord électrique pour une combinaison avec prises de courant électriques placées dans un conduit

(30) Priorität: 05.02.1991 FI 910557
(43) Veröffentlichungstag der Anmeldung: 12.08.1992
(73) Patentinhaber: A. AHLSTROM CORPORATION, FIN-29600 Noormarkku (FI)
(72) Erfinder: Seger, Leif, SF-07920 Lovisa 4 (FI)
(74) Vertreter: Füchsle, Klaus, Dipl.-Ing.

(56) Entgegenhaltungen:
- CH-A- 460 111
- DE-A- 2 638 974
- DE-A- 3 336 817
- DE-B- 1 690 402
- US-A- 4 952 164

## Beschreibung

Diese Erfindung betrifft eine in einem rinnenförmigen Elektrokanal zu installierende Kanal-Elektrodosenkombination, mit mindestens einer Kanal-Elektrodose oder dgl. , die Kanal-Elektrodose umfassend passende Befestigungsorgane zur Befestigung derselben in einem Elektrokanal oder an anderen Teilen der Kanal-Elektrodosenkombination.

Unter Elektrokanal versteht man hier an der Wand installierbare, in der Regel aus einem U-förmigen Grundprofil auf verschiedene Weisen modifizierte rinnenförmige Kanäle, in denen Kanal-Elektrodosen installiert werden können. Unter Kanal-Elektrodose versteht man hier verschiedene in einem Elektrokanal installierbare Installationsgeräte und Vorrichtungen, wie z.B. Kanalsteckdosen, Schalter, Meßgeräte, Anschlußklemmen für Tele-, Telefon- und Datenübertragungsverbindungen und anderes ähnliches Elektrozubehör. Unter Kanal-Einbau dose versteht man hier eine in einem Elektrokanal installierbare Schutzdose, in der wiederum verschiedene obengenannte Installationsgeräte und Vorrichtungen installiert werden können.

Die Ränder des offenen Teils des Elektrokanals sind zum Inneren des Elektrokanals hin gebogen und derart ausgestaltet, daß sie als Anlageflächen für die Befestigungsorgane der im Elektrokanal zu installierenden Kanal-Elektrodosen funktionieren und einerseits das Hineinschlüpfen von Kanal-Elektrodosen in den Elektrokanal verhindern und anderseits deren versehentliches Lösen vom Elektrokanal verhindern. Diejenigen Bereiche des Elektrokanals, wo sich keine Kanal-Elektrodosen befinden, werden mittels passend abgelängter blinder Frontplatten verdeckt, deren Querprofil derartig geformt ist, daß sie sich leicht, z.B. durch Drücken am Elektrokanal befestigt werden können. Von den im Elektrokanal installierten Kanal-Elektrodosen sind somit nur die Ausgänge nach außen sichtbar. Sämtliche Leitungen und sonstiges Installationsmaterial sind unsichtbar im Inneren des Elektrokanals.

Eine in einem Elektrokanal installierbare Kanal-Einbaudose ist z.B. aus der Patentanmeldung FI 872247 bekannt, wo sie als Elektrodose bezeichnet wird. In dieser Veröffentlichung ist eine in einem Elektrokanal installierte Schutzdose dargestellt, die einstückig gegossen werden kann und in der sich verschiedene Installationsgeräte oder Vorrichtungen einbauen lassen, wie Steckdosen, Schalter usw. Diese Schutzdose ist mit mehreren Sollbruchstellen zur Einführung von Kabeln versehen. Die Schutzdose läßt sich auch im Elektrokanal mit federnden Rastorganen ohne Werkzeug installieren.

Wenn mindestens zwei z.B. Doppelsteckdosen oder ähnliche Installationsgeräte in benachbarten Schutzdosen in einem Elektrokanal eingesetzt sind, können z.B. bei der Lösung gemäß der oben erwähnten Veröffentlichung die benachbarten Schutzdosen über ein getrenntes Kabel miteinander verbunden werden und die elektrischen Leitungen getrennt innerhalb einer jeden Schutzdose an das betreffende Doppelsteckdosen-Element angeschlossen werden. Das Verbindungskabel zwischen zwei Schutzdosen im Elektrokanal soll hierbei laut Vorschriften jedoch an den beiden Schutzdosen mit Zugentlastungsgliedern befestigt werden. Die Kanal-Elektrodosen gemäß der obengenannten Veröffentlichung sind mit Sollbruchstellen versehen, an denen sich getrennte, in derselben Veröffentlichung dargestellte Zugentlastungsglieder befestigen lassen. Die Verbindung von Schutzdosen mittels eines Zwischenkabels kann natürlich nur dann erfolgen, wenn der Leistungsbedarf an den Steckdosen die Benutzung einer einzigen einphasigen (Phase, Null und Schutzerde) Zuleitung zuläßt. Eine andere bekannte Weise, mit der betreffenden Situation fertig zu werden, besteht darin, daß Strom zu jeder Schutzdose über getrennte einphasige Kabel der oben beschriebenen Art zugeleitet, für Zugentlastungsmaßnahmen bei jedem Kabel gesorgt wird und die elektrischen Leiter innerhalb einer jeden Schutzdose an das betreffende Doppel-Steckdosenelement getrennt angeschlossen werden. Die Installation ist jedoch kompliziert und mühsam und umfaßt mehrere getrennte Arbeitsgänge; ein Teil davon muß ohne Werkzeuge ausgeführt werden, bei einem Teil davon werden Werkzeuge und getrennte Kabelstücke benötigt. Sämtliche sog. Netzstrom erfordernden Teile sollen auch in getrennten Schutzdosen installiert werden.

Aus der US-A-49 52 164 ist eine Elektrodosenkombination bekannt, bestehend aus mindestens einer Elektrodose, die für den Einbau in einen nicht näher beschriebenen Kanal vorgesehen ist. Die Elektrodosenkombination umfaßt ferner Stromleisten, die in ihrem Inneren zehn flache, parallele, vertikal benachbarte Stromleitungen beinhalten. Die Stromleisten besitzen jeweils an ihren Seitenflächen angeordnete durchgehende Öffnungen, innerhalb denen die vorhergenannten Stromleitungen der Stromleisten freiliegen. Die Elektrodosen können über steckerartige Fortsätze, in denen Kontaktelemente berührungsgeschützt gelagert sind, in die Öffnungen der Stromleisten eingesteckt und eine elektrische Kontaktierung zwischen elektrisch leitenden Kontaktelementen der Elektrodosen und den Stromleitern der Stromleisten hergestellt werden. Eine elektrische Verbindung der Stromleisten zum Stromnetz wird über endseitige Anschlußteile, die auf ähnliche Weise wie die Elektrodosen mit den Stromleisten verbunden sind, gewährleistet.

Aus der DE-A-33 36 817 ist ferner ein Stecksystem für elektrische Installationen des 220 Volt-Wechselstromnetzes bekannt, mit fertigverdrahteten Steckmodulen für Steckdosen, Schalter, Lampensockel sowie Verbindungsleisten, wobei diese Steckmodule wahlweise mit fertigverdrahteten Verteilermodulen verbindbar sind, die auf drei Seiten Steckbuchsenreihen und auf einer Seite eine Steckerreihe aufweisen, die wiederum an eine Steckbuchsenreihe eines Zuleitungsmoduls anschließbar ist. Zum Zwecke der Absicherung der Steckverbindungen zwischen den Steckbuchsenreihen und einem Zuleitungsmodul, einem Steckmodul oder einer Steckerreihe ist im Fall einer Feuchtraumverlegung eine gummiartige Manschette vorgesehen, deren genaue Ausgestaltungsform jedoch nicht beschrieben ist.

Bei den bekannten Lösungen erheben sich durch in Elektrokanälen installierbare Kanal-Elektrodosenkombinationen aus z.B. Steckdosen- oder entsprechenden leicht Probleme auch dann, wenn man nachträglich Ergänzungen oder Veränderungen an in ein und demselben Elektrokanal eingesetzten z.B. mehrere Steckdosen oder sonstige für Netzspannung ausgelegte Geräte umfassenden Elektroinstallationsgruppen vornehmen will. Innerhalb einzelner Elektroinstallationsgruppen kann natürlich nachgeriistet und verschiedene Kanal-Elektrodosenkombinationen zu einer größeren Einheit zusammengefaßt werden, indem das einphasige Versorgungskabel der oben beschriebenen Art von einer Kanal-Elektrodosenkombination zur anderen weitergeleitet wird, wenn man nur unter der für ein dreiadriges Kabel zulässigen, durch die Maximalbelastung bestimmte Grenze bleibt. Werden im Elektrokanal zusätzliche Steckdosen oder sonstige entsprechende Vorrichtungen gebraucht, deren Leistungsbedarf bereits die zulässige Maximalbelastung für die im selben Elektrokanal bereits befindliche Elektroinstallationsgruppe iibersteigt, soll zu dieser betreffende Kanal-Elektrodosenkombination eine eigene ganz neue Zuleitung verlegt werden und somit daraus eine eigene neue Elektroinstallationsgruppe gebildet werden. Hierbei erfolgt die Stromversorgung für jede durch die zulässige Maximalbelastung festgelegte Elektroinstallationsgruppe über ein eigenes dreiadriges Kabel, die von der nächsten Gruppenzentrale verlegt werden soll. Es ist selbstverständlich klar, daß durch die betreffenden, sogar sehr gewöhnlichen nachträglich erfolgenden Veränderungen/Ergänzungen den Auftraggebern von Installationen hohe Mehrkosten, dem die Arbeit ausfüihrenden Installateuren Schwierigkeiten und Störungen in den Arbeitsverhältnissen aller derjenigen Leute zur Folge haben, deren Arbeitsplätze sich zwischen der Nachrüstungsstelle und der nächsten Gruppenzentrale befinden, denn so eine Veränderungsarbeit wird nicht augenblicklich erledigt. In Verbindung mit dem Nachrüsten ist man gezwungen, lange Abschnitte des Kabelkanals zu öffnen und im betreffenden Elektrokanal mehrere zusätzliche Meter neues Elektrokabel zu verlegen sowie das betreffende Kabel in der Gruppenzentrale anzuschließen.

Durch die vorliegende Erfindung soll eine Elektrodosenkombination geschaffen werden, die nebst ihrer völlig neuen Eigenschaften u.a. auch eine Verbesserung für die obengenannten bekannten Lösungen und eine Antwort auf die oben angeführten, sich beim Nachrüsten erhebenden Probleme darstellt.

Diese Aufgabe wird gelöst durch eine erfindungsgemäße Kanal-Elektrodosenkombination mit den Merkmalen des Anspruchs 1.

Die erfindungsgemäße Kanal-Elektrodosenkombination läßt sich leicht einund ausbauen und ihre Teile können auf eine einfache Weise, ohne Werkzeuge und getrennte elektrische Leiter elektrisch und mechanisch miteinander verbunden und die Kanal-Elektrodosenkombination im Elektrokanal ohne separate Schutzdose installiert werden. Die von der Kanal-Elektrodosenkombination benötigte Versorgungsspannung läßt sich auf vielfache Weise, also auch durch Ausnutzung der Abwechslung der dreiphasigen Versorgung effektiv und dennoch leicht bei jeder Kanal-Steckdose der Kanal-Elektrodosenkombination verwirklichen. Zusätzliche Steckdosen oder entsprechende, zusätzliche Leistung voraussetzende Vorrichtungen können nachträgliche leicht, ohne aufwendiges Öffnen des Elektrokanals, sowohl in einzelnen Kanal-Elektrodosenkombinationen als auch zu eigenen Kanal-Elektrodosenkombinationen hinzugefügt werden. Die Abdeckungen der Kanal-Elektrodosenkombinationen lassen sich auf einfache Weise und mit wenigen Teilen bilden und sauber anbringen, und sämtliche mit der Kanal-Elektrodosenkombination verbundenen mechanischen Befestigungsmaßnahmen können ohne Werkzeuge und die entstandenen mechanischen Verbindungen leicht, z.B. mittels eines Schraubenziehers gelöst werden.

Eine erfindungsgemäße Kanal-Elektrodosenkombination läßt sich aus einem getrennten Anschlußteil + mindestens einer Kanal-Elektrodose oder zu einer Kanal-Elektrodose fest gehörenden Anschlußteil und damit eventuell gekuppelten Kanal-Elektrodosen bilden. Wie früher bereits beschrieben wurde, versteht man unter Kanal-Elektrodose zahlreiche alternative in einem Elektrokanal installierbare Elektrozubehörgegenstände.

Die Erfindung wird im folgenden anhand eines erfindungsgemäßen Anwendungsbeispiels, nämlich einer aus zwei Doppel-Schutzkontakt-Sicherheits-Kanalsteckdosen und einem getrennten Anschlußteil bestehenden Kanal-Elektrodosenkombination mit Verweis auf die beiliegenden Zeichnungen eingehender beschrieben. Es zeigt dabei
Fig. 1 schematisch einen einfachen Elektrokanal, in dem eine aus zwei Doppel-Schutzkontakt-Sicherheits-Kanalsteckdosen zusammengesetzte Kanal-Elektrodosenkombination installiert ist. In die eine Doppel-Schutzkontakt-Sicherheits-Kanalsteckdose ist ein schutzgeerdeter Winkelstecker eingesetzt,
Fig. 2a in Draufsicht die Kanal-Steckdosenkombination aus Fig. 1 im Elektrokanal eingesetzt, ohne Frontplatten des Elektrokanals, Schutzdeckel des Anschlußteils und Kopfleisten,
Fig. 2b axonometrisch Fig. 2a,
Fig. 3a den Trägerteil des getrennten Anschlußteils in Draufsicht,
Fig. 3b den Trägerteil aus Fig. 3a in Seitenansicht,
Fig. 3c den oberen Teil des Zugentlastungsglieds,
Fig. 3d den Schutzdeckel des Anschlußteils in Draufsicht,
Fig. 3e den Schutzdeckel des Anschlußteils in Seitenansicht,
Fig. 4 in Detail die elektrischen Anschlußorgane zwischen den Teilen einer Kanal-Elektrodosenkombination,
Fig. 5a axonometrisch eine Kanal-Steckdose,
Fig. 5b eine Kanal-Steckdose in Draufsicht,
Fig. 5c das Zuleitungsende einer im Elektrokanal installierten Kanal-Steckdose,
Fig. 6a eine Kopfleiste in Frontansicht und
Fig. 6b eine Kopfleiste in Draufsicht,
Fig. 6c eine Kopfleiste von der Stirnseite aus gesehen.

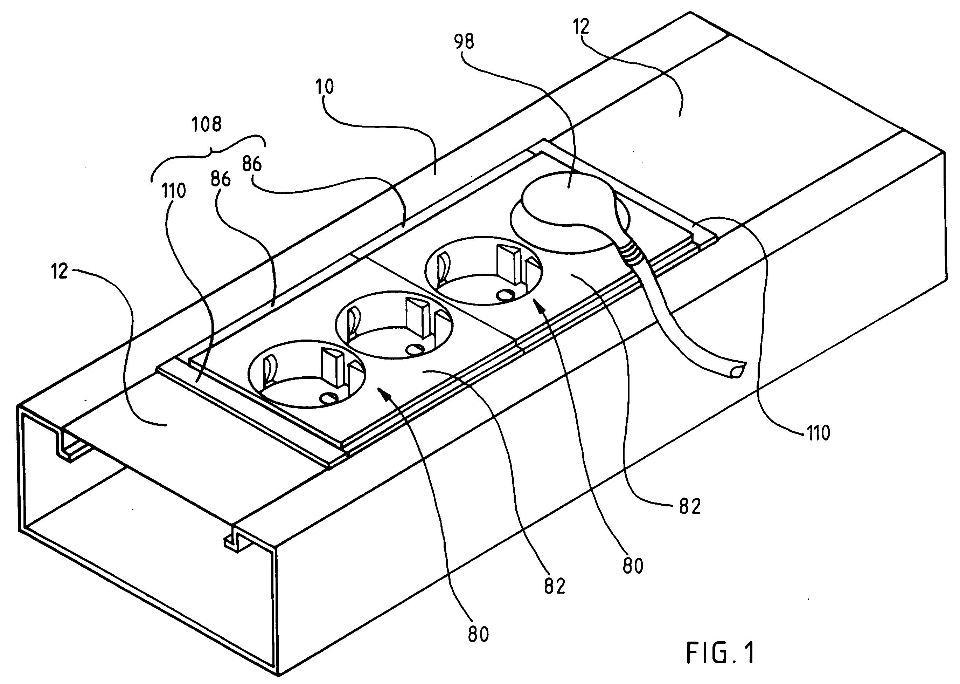

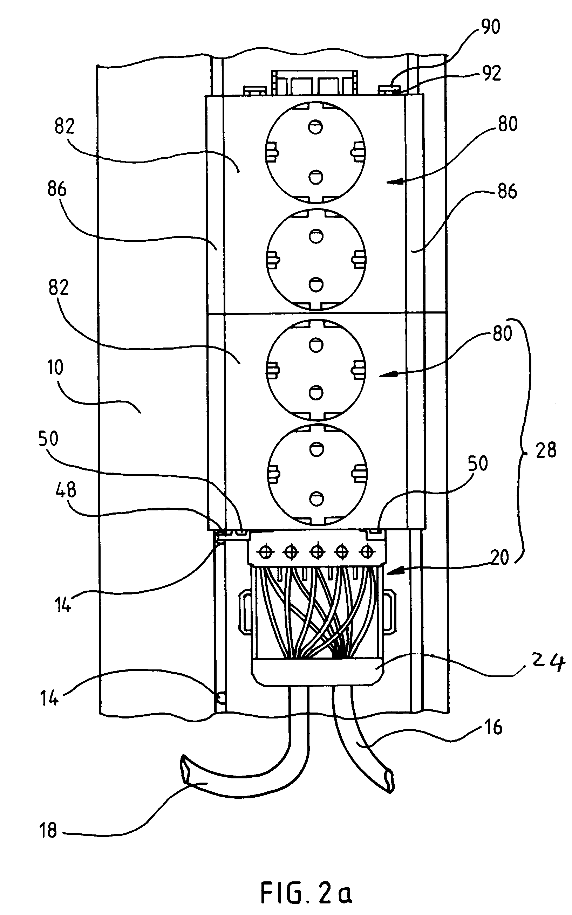

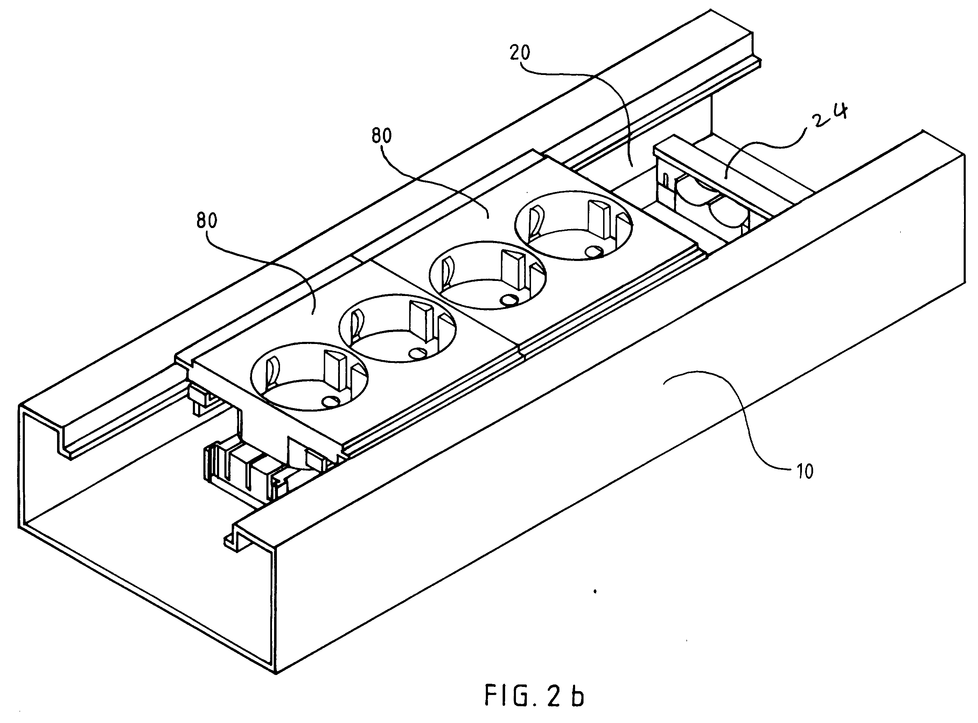

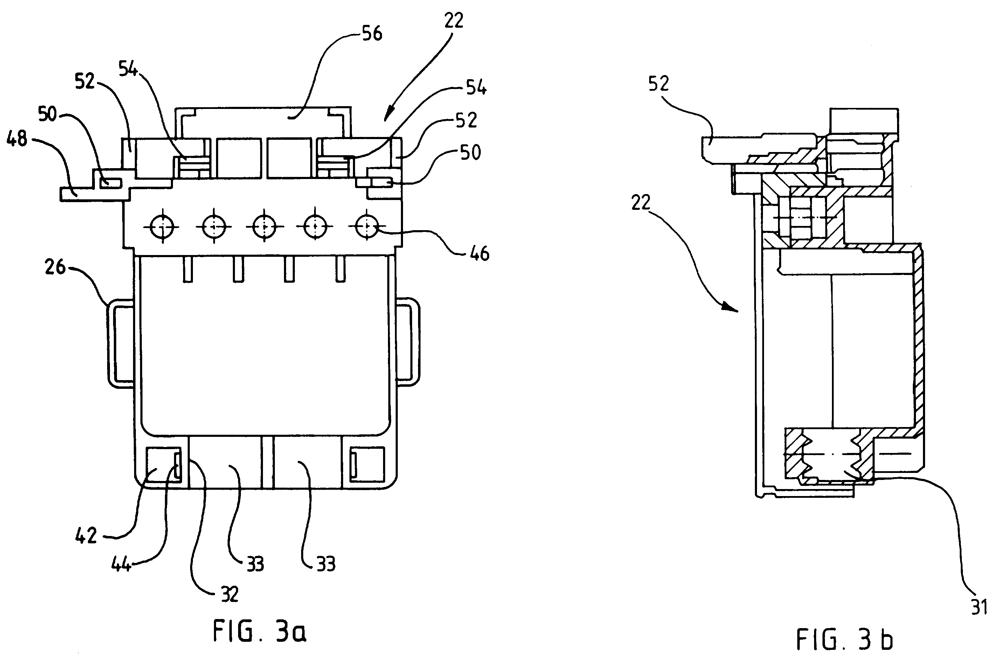

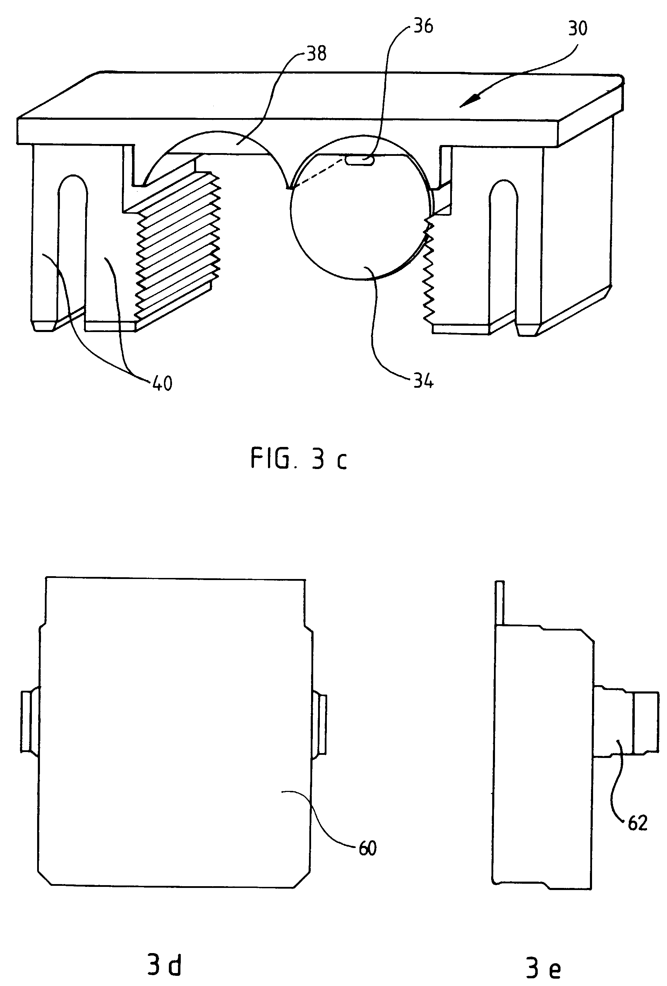

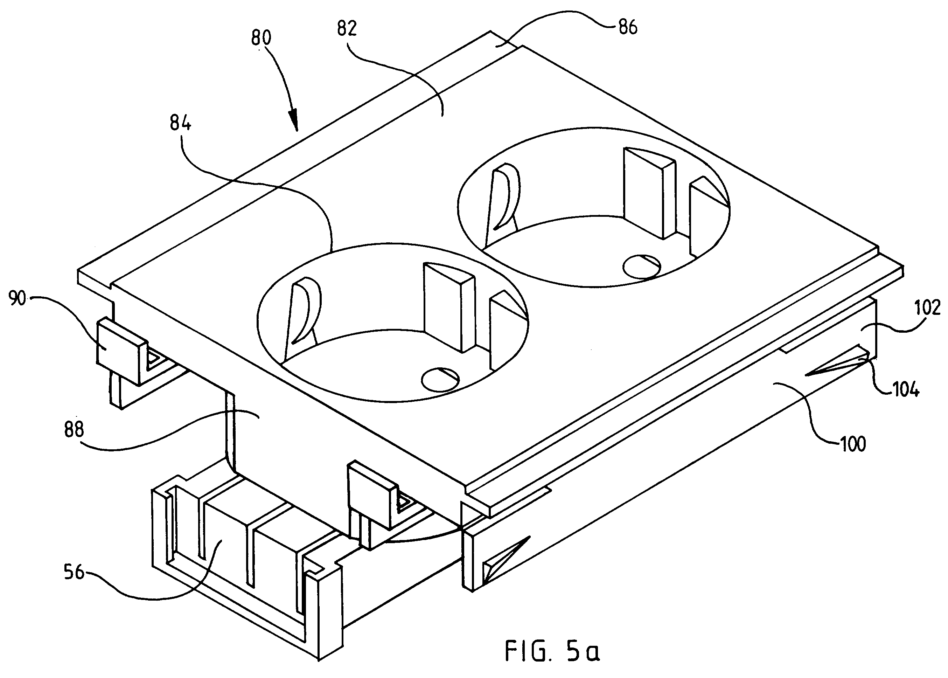

Der in Fig. 1 dargestellte, an der Wand installierbare Elektrokanal 10 wird nach Bedarf waagerecht, bevorzugt unmittelbar unterhalb der Fensterebene, oder senkrecht montiert. Im Elektrokanal 10 ist eine aus Kanal-Elektrodosen, in diesem Fall also aus zwei Doppel-Schutzkontakt-Sicherheits-Kanalsteckdosen 80 und einem Anschlußteil 20 (nicht sichtbar, in den Fig. 2 gezeigt und Fig. 3 detaillierter dargestellt) zusammengesetzte Kanal-Elektrodosenkombination installiert, wobei an den Stirnseiten von deren Kanal-Steckdosen Kopfleisten 110 angebracht sind. Die Kopfleisten 110 und die zu Elektrokanal parallelen Ränder der Kanal-Steckdosen 80 bilden zusammen die Abdeckung 108 für diese aus Kanal-Steckdosen zusammengesetzte Kanal-Elektrodosenkombination. Diejenigen Bereiche des Elektrokanals 10, wo sich keine Kanal-Elektrodosen befinden, werden mit passend abgelängten blinden Frontplatten 12 verdeckt, die in Querprofil derart geformt sind, daß sie z.B. durch Drücken am Elektrokanal befestigt werden können. Von den im Elektrokanal installierten Kanal-Elektrodosen sind somit nur deren Ausgänge nach außen sichtbar. Sämtliche Leitungen und sonstiges Installationszubehör sind unsichtbar im Inneren des Elektrokanals. In der einen Kanal-Steckdose 80 ist ein Winkelstecker 98 aufgesteckt, dessen Kabel von der Seite, in einem Winkel von ca. 90 ° gegenüber den Kontaktstiften mit dem Stecker verbunden ist. Bei diesem Stecker befindet sich die Anschlußstelle des Kabels mit dem Stecker in einem Winkel von ca. 90 ° zu der von den Kontaktstiften gebildeten Linie.

In den Fig. 2 ist eine Kanal-Elektrodosenkombination in einem Elektrokanal 10 fertig installiert, ohne Frontplatten 12 des Elektrokanals und Kopfleisten 110 dargestellt. Zu dieser Kanal-Elektrodosenkombination gehören zwei Kanal-Steckdosen 80 und ein Anschlußteil 20, der ohne Schutzdeckel 60 (in Fig. 3a und 3b gezeigt) dargestellt ist, wobei die Anordnung des Zugentlastungsglieds 24, des Zuleitungskabels 16 und des abgehenden Fortsetzungskabels 18 im Anschlußorgan 20 deutlich ersichtlich ist. Die Lage des Anschlußteils 20 in der Kanal-Elektrodosenkombination und deren Position im Elektrokanal 10 sind ebenfalls veranschaulicht dargestellt. An dem einen der einwärts gebogenen Ränder des Elektrokanals, in dem unterhalb der Frontplatte liegenden Bereich sind Haltenuten 14 eingearbeitet. An den Teilen der Kanal-Elektrodosenkombination kann entsprechend ein Halteteil, wie Position 48 in Fig. 3a, angeordnet werden, der in eine der obengenannten Haltenuten 14 eingreift und dadurch verhindert, daß sich der betreffende Teil der Kanal-Elektrodosenkombination und die anderen damit gekuppelten Teile der Kanal-Elektrodosenkombination in der Längserstreckung des Elektrokanals bewegen. Wenn eine Kanal-Einbaudose, in diesem Fall die Kanal-Steckdose 80 und der Anschlußteil 20 eine feste Gesamtheit bilden, wird dieser durch die feste Gesamtheit gebildete Teil der Kanal-Elektrodosenkombination als integrierter Anschlußteil 28 bezeichnet.

In den Fig. 3 ist der Aufbau des getrennten Anschlußteils 20 detaillierter dargestellt. Der Anschlußteil 20 besteht aus einem Trägerteil 22, einem Zugentlastungsglied 24, Anschlußklemmen 46 zum Weiterschalten, einem Halteteil 48, Befestigungsöffnungen 50 für die Kopfleiste, Stützleisten 52, Befestigungsorganen 54 des Anschlußteils, einem Ableitungsende 56, einem Schutzdeckel 60 und den Befestigungsorganen 26 und 62 des Schutzdeckels.

In Fig. 3a und 3c ist ein zum Anschlußteil 20 gehörendes zweiteiliges, aus einen Oberteil 30 und einem zum Anschlußteil 20 fest gehörenden Unterteil 32 gebildetes Zugentlastungsglied 24 dargestellt. Der Oberteil 30 weist eine Kabelklemme 38, eine Sollbruchstelle 34, einen Ausschnitt 36, sowie ein zweiteiliges Rastorgan 40 auf, an dessen einem Ende eine Rastverzahnung angeordnet ist. Die eine der Kabelöffnungen 31 ist durch ein am Oberteil angeordnete Sollbruchstelle 34 verdeckt. Diese Sollbruchstelle 34 läßt sich leicht, z.B. mit der Hand an dem darin angeordneten Ausschnitt 36 abbrechen, wenn im Anschlußteil 20 zwei Kabelöffnungen benötigt werden, wenn also für die Zu- und Ableitung 16, 18 eine mit Zugentlastungsgliedern versehene Durchführung 31 benötigt wird. Wenn die Sollbruchstelle 34 am Ausschnitt 36 abgebrochen wird, wird aus dem restlichen Teil eine ähnliche Kabelklemme gebildet, wie sie im offenen Ausschnitt bereits vorhanden ist. Der Unterteil 32 weist Öffnungen 42 mit einer Schwelle 44 sowie Böden 33 der Kabelöffnung auf. Wenn der Oberteil 30 in die Öffnung 42 des Unterteils 32 hineingreift, verhindert die Schwelle 44 in der Öffnung 42, daß die Verzahnung des Befestigungsteils und somit der ganze Oberteil 30 ausgehoben wird. Der Oberteil 30 des Zugentlastungsglieds läßt sich somit am Unterteil 32 mit dieser einfachen sog. Snap-on-Verbindung, ohne Werkzeuge, lediglich durch Drücken kuppeln und leicht, z.B. mit einem Schraubenzieher öffnen.

Fig. 3a und 3b zeigen detaillierter den Trägerteil 22 des Anschlußteils 20. Der Trägerteil umfaßt fünft zum Weiterschalten geeignete Klemmen 46 für elektrische Leiter, welche Klemmen entweder ohne oder mit Schrauben ausgeführt sind. Der seitlich am Trägerteil angeordnete Halteteil 48 verhindert, wie bereits erwähnt wurde, daß sich der Anschlußteil 20 und somit gleichzeitig die anderen mit dem Anschlußteil 20 verbundenen Kanal-Elektrodosen, in diesem Fall also die durch die Kanal-Steckdosen 80 gebildete Kanal-Elektrodosenkombination in der Längserstreckung des Elektrokanals bewegt, indem sie in eine der an den einwärts gebogenen Rändern des Elektrokanals angeordneten Haltenuten 14 eingreift. Der getrennte Anschlußteil wird ja im Elektrokanal nur durch den obengenannten Halteteil 48 mechanisch fixiert, was zuläßt, daß die Frontplatte 12 derart fixiert wird, daß sie den im Elektrokanal eingesetzten Anschlußteil 20 verdeckt. In den Durchbrüchen 50 des Anschlußteils rastet die Kopfleiste 110 ein, die den Kopfteil der Abdeckung 108 der Kanal-Elektrodosenkombination bildet. Die Stützen 52 kommen bei der mechanischen Kupplung des Anschlußteils 20 und der damit verbundenen Kanal-Steckdose 80 hinter der Endplatte 94 am Zuleitungsende der Kanal-Steckdose 80 zu liegen, wobei sie ihrerseits diese mechanische Verbindung abstützen. Die Befestigungsorgane 54 des Anschlußteils 20 hinterfassen bei der mechanischen Kupplung des Anschlußteil und der damit verbundenen Kanal-Steckdose 80 auch die Endplatte 94 am Zuleitungsende der Kanal-Steckdose und rasten in den darin angeordneten Durchbrüchen 96 ein, womit sie verhindern, daß sich der Anschlußteil 20 von der benachbarten Kanal-Steckdose löst. Die durch die Befestigungsorgane 54 des Anschlußteils mit der Kanal-Steckdose gebildete Verbindung läßt sich auch leicht, z.B. mit einem Schraubenzieher lösen. Der Anschlußteil 20 wird über das Ableitungsende 56 mit der folgenden Kanal-Elektrodose berührungssicher verbunden.

In Fig. 3d und 3e ist der die Zugentlastungsglieder und elektrischen Anschlußklemmen abdeckende Schutzdeckel 60 dargestellt, der über seinen männlichen Befestigungsorgane 62 in die weiblichen Befestigungsorgane 26 im Trägerteil 22 des Anschlußteils ohne Werkzeuge, mit einer sog. Snap-on-Verbindung eingreift. Auch diese mechanische Verbindung läßt sich leicht mit der Hand, z.B. mittels eines Schraubenziehers lösen.

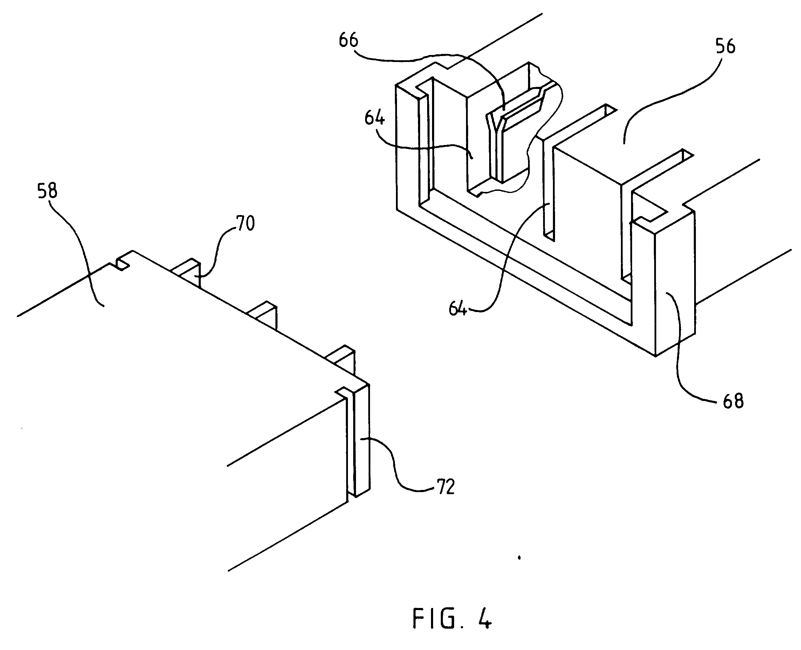

Fig. 4 zeigt detaillierter die anwendungsgemäßen elektrischen Kontaktglieder zwischen den verschiedenen Teilen einer in einem Elektrokanal einzufügenden Kanal-Elektrodosenkombination. Die an den verschiedenen Teilen der Kanal-Elektrodosenkombination angeordneten Ableitungsenden 56 und Zuleitungsenden 58 sind bei jedem Teil der Kanal-Elektrodosenkombination identisch, sowohl bei den Kanal-Steckdosen gemäß diesem Beispiel als auch dem Anschlußteil. Der Anschlußteil 20 weist nur ein Ableitunsende 56 auf, denn der elektrische Strom wird dem Anschlußteil über ein Versorgungskabel zugeführt, während die Kanal-Elektrodosen sowohl ein Ableitungsende 56 als auch ein Zuleitungsende 58 aufweisen. An dem Strom speisenden Ableitungsende 56 sind drei Schlitze 64 für Kontaktglieder angeordnet, worin elektrisch berührungssicher drei weibliche Kontaktglieder 66 (Phase, Null und Schutzerde) angeordnet sind, über die der von den Kanal-Elektrodosen benötigte Versorgungsstrom von einem zum anderen Teil der Kanal-Elektrodosenkombination geleitet wird. Das Zuleitungsende 58 hat entsprechend drei männliche Kontaktglieder 70 (Phase, Null und Schutzerde), über die die Kanal-Elektrodose den über die weiblichen Kontaktglieder 66 übermittelten Versorgungsstrom empfängt. Die in Fig. 4 dargestellten Kontaktglieder 66 und 70 sind als Kontaktglieder des sog. Messertyps ausgeführt. Eines der in Fig. 4 dargestellten weiblichen Kontaktglieder 66 des Messertyps ist teilweise aufgebrochen dargestellt, um die Konstruktion eines Kontaktglied des Messertyps in Detail zu veranschaulichen. Beim Befestigen von Teilen der Kanal-Elektrodosenkombination aneinander greifen die weiblichen und männlichen Kontaktglieder 66, 70 ineinander und stellen einen elektrischen Kontakt zwischen den Teilen der Kanal-Elektrodosenkombination her. Die durch die elektrischen Kontaktglieder 66 und 70 gebildete Verbindung ist seitlich und unten durch einen Schutzkragen 68 umgeben, um den Berührungsschutz dieser Verbindung zu sichern. Beim Befestigen von Teilen der Kanal-Elektrodosenkombination aneinander greifen die Ränder des Schutzkragens 68 in die seitlich am Zuleitungsende 58 angeordneten Befestigungsnuten 72 ein und sichern auch ihrerseits sowohl die mechanische Kupplung der verschiedenen Teile der Kanal-Elektrodosenkombination miteinander als auch den Berührungsschutz der durch die Kontaktglieder 66 und 70 gebildeten elektrischen Verbindung.

Die Kontaktglieder der benachbarten Teile einer Kanal-Elektrodosenkombination, d.h. die elektrischen Strom einspeisenden, bevorzugt aus Leiterschienen gebildeten, weiblichen Kontaktglieder 66 und die elektrischen Strom empfangenden, bevorzugt aus Leiterschienen gebildeten, männlichen Kontaktglieder 70 der nächsten Kanal-Elektrodose lassen sich ohne Werkzeug und getrennte elektrische Leiter berührungsgeschützt miteinander kuppeln.

Die elektrischen Strom einspeisenden Kontaktglieder sind an sich berührungsgeschützt. Die elektrischen Strom einspeisenden männlichen und weiblichen Kontaktglieder sind vorteilhaft als solche bekannte Kontaktglieder des sog. Messertyps 66, 70 oder des Gabeltyps, aber es können auch andere Kontaktglieder eingesetzt werden, die auf der Strom einspeisenden Seite der Anforderung von Berührungsschutz gerecht werden. Die Leiterschienen sowohl im getrennten Anschlußteil 20 als in den Kanal-Elektrodosen sind durch eine Grundplatte 106 derart verdeckt, daß die im Elektrokanal liegenden Abschnitte dieser Teile ebenfalls elektrisch berührungsgeschützt sind. Durch das obige Stromversorgungskonzept in Verbindung mit den im Anschlußteil befindlichen, zur Befestigung und Fortschaltung des Stromversorgungskabels konstruierten Kontaktgliedern wird ermöglicht, daß die Kanal-Elektrodose gemäß der vorliegenden Erfindung, besonders vorteilhaft die Kanal-Steckdose 80 ohne eine getrennte Schutzdose im Elektrokanal 10 installiert werden kann. Die erfindungsgemäße einzelne Kanal-Elektrodose ist also durchaus vollkommen berührungssicher abgesehen von den elektrischen Strom empfangenden Kontaktgliedern 70. Der an einer Kanal-Elektrodose oder an erfindungsgemäß aneinandergereihten Elektrodosen kuppelbare getrennte Anschlußteil 20 ist ebenfalls elektrisch vollkommen berührungssicher und mit den erforderlichen Zugentlastungsgliedern für die Elektrokabel ausgestattet. Die gesamte solche Kanal-Elektrodosenkombination läßt sich also im Elektrokanal ohne getrennte Schutzdosen installieren.

Wenn die erfindungsgemäße Kanal-Elektrodosenkombination mit einphasigem Netzstrom oder Drehstrom gespeist wird, wird er zunächst an den Anschlußteil 20 angelegt, der als getrennter Teil 20 ausgeführt sein oder als Bestandteil zu einer, in der Regel in der Eintrittsrichtung des Versorgungskabels als nächste liegenden Kanal-Elektrodose der Kanal-Elektrodosenkombination gehören kann, wobei er als integrierter Anschlußteil 28 bezeichnet wird. Die erfindungsgemäße Kanal-Elektrodosenkombination weist passende Stromversorgungsglieder 46 und 56 oder entsprechende auf, die außer dem gewöhnlichen sog. Netzstrom, d.h. der einphasigen Versorgung (Phase, Null und Schutzerde) auch die Verwendung von dreiphasiger Versorgung (L₁, L₂, L₃, Null und Schutzerde) und deren wirksame Abwechslung derart ermöglichen, daß jede Kanal-Elektrodosenkombination einphasig mit dieser dreiphasigen Gruppe verbunden ist. Bei der erfindungsgemäßen Lösung hat somit jede Kanal-Elektrodosenkombination entweder einen getrennten oder einen zu einer Kanal-Elektrodose integrierten Anschlußteil 20, 28 und darin passende, zum Weiterschalten geeignete elektrische Kontaktglieder 46 oder dgl. mit 5 Anschlußklemmen sowohl für die Zuleitung 16 als für ein eventuell abgehendes Fortsetzungskabel 18, welche Anschlußglieder die Verwendung von dreiphasiger Versorgung und deren wirksame Abwechslung in den verschiedenen Kanal-Elektrodosenkombinationen ermöglichen. Der Anschlußteil 20 weist auch ein Zugentlastungsglied 24 sowohl für das eintreffende als auch für das für die Bedürfnisse der nächsten Kanal-Elektroinstallationsgruppe eventuell zu verlegende Versorgungskabel 16 und 18 auf. Über dem Zugentlastungsglied 24 und den elektrischen Anschlußklemmen 46 ist ein Schutzdeckel 60 angeordnet, der sich ohne Werkzeuge anbringen und leicht, z.B. mit der Hand oder einem Schraubenzieher lösen läßt. Wenn der Anschlußteil 20 geöffnet, also ohne Schutzdeckel 60 ist, kann leicht kontrolliert werden, ob der elektrische Anschluß richtig ausgeführt ist. Sowohl die zu- als auch abgehendenen elektrischen Leiter können am Anschlußteil entweder über Verbindungen mit oder ohne Schrauben angeschlossen werden. An den Anschlußklemmen 46 des separaten Anschlußteils 20 werden die eintreffenden elektrischen Leiter an elektrische Leiter innerhalb des Anschlußteils angeschlossen, die vorteilhaft als Leiterschienen ausgeführt sind. Die aus im Anschlußteil angeordneten elektrischen Leitern, vorzugsweise aus Leiterschienen gebildeten weiblichen Kontaktglieder 66 übermitteln ihrerseits den Strom an die männlichen Kontaktglieder 70 der benachbarten Kanal-Elektrodose.

An den einwärts gebogenen Rändern des Elektrokanals 10, in dem unterhalb der Fronplatte befindlichen Abschnitt lassen sich mit einer durch die Standardgröße von Kanal-Einbaudosen oder Kanal-Steckdosen ohne Schutzdose oder getrennte Anschlußteile festgelegte Teilung Haltenuten 14 einarbeiten. Am Anschlußteil kann auch ein Halteteil 48 angeordnet werden, der in eine der obengenannten Haltenuten 14 eingreift und somit verhindert, daß sich der Anschlußteil 20 und die anderen mit dem Anschlußteil gekuppelten Kanal-Elektrodosen, also die gesamte betreffende Kanal-Elektrodosenkombination in der Längserstrekkung des Elektrokanals bewegt. Der Anschlußteil selbst, sowohl der getrennte Anschlußteil 20 als der zur Kanal-Elektrodose gehörende integrierte Anschlußteil 28 sind im Elektrokanal derart eingefügt, daß seine obere Fläche unterhalb der Frontplatte 12 des Elektrokanals zu liegen kommt. Wenn die Kanal-Elektrodosenkombination im Elektrokanal 10 installiert ist, ist der Anschlußteil also nicht sichtbar, sondern die Frontplatte 12 verdeckt ihn und erstreckt sich bis an den Rand der ersten Kanal-Elektrodose der Kanal-Elektrodosenkombination. Der getrennte Anschlußteil 20 wird im Elektrokanal 10 nur über den obengenannten Halteteil 48 mechanisch fixiert, welcher Halteteil also an dem unterhalb der Frontplatte 12 des Elektrokanals angeordneten Teil des Profils der einwärts gebogenen Ränder des Elektrokanals eingreift. Durch diesen Halteteil 48 wird jedoch nur die Bewegung des Anschlußteils in der Längserstreckung des Elektrokanals unterbunden. Der Anschlußteil 20 und die Kanal-Elektrodose weisen dagegen geeignete Befestigungsorgane 54 und 96 zur mechanischen Kupplung dieser Teile ohne Werkzeug mitaneinander. Diese mechanische Verbindung läßt sich auch leicht z.B. mittels eines Schraubenziehers lösen. Der Anschlußteil 20 kann somit leicht mechanisch an die Kanal-Steckdose angekuppelt und elektrisch berührungssicher an dieselbige Kanal-Elektrodose angeschlossen werden.

Wenn der Anschlußteil ein Bestandteil der Kanal-Elektrodose ist, werden selbstverständlich keine mechanischen oder elektrischen Kupplungsglieder zur Verbindung dieser Teile miteinander benötigt. Der integrierte Anschlußteil 28 weist ansonsten genau die gleichen Organe wie der getrennte Anschlußteil 20 auf. Wenn das Versorgungskabel elektrisch an den zur Kanal-Elektrodose integrierten Anschlußteil 28 angeschlossen wird, kann über die innerhalb der betreffenden Kanal-Elektrodose befindlichen elektrischen Leiter, vorzugsweise Leiterschienen, der Strom sowohl für die Bedürfnisse dieser Kanal-Elektrodose als auch an die aus denselben Leiterschienen gebildeten weiblichen Kontaktglieder 66 angeschlossen werden, die ihrerseits den Strom an die männlichen Kontaktglieder 70 der nächsten Kanal-Elektrodose weiterreichen. Auch bei der Alternative mit einem integrierten Anschlußteil 28 ist der Anteil des Anschlußteils von dieser Kombinations-Elektrodose im Elektrokanal 10 derart angeordnet, daß seine obere Fläche unterhalb der Frontplatte des Elektrokanals zu liegen kommt. Die Frontplatte 12 des Elektrokanals erstreckt sich also auch bei dieser Lösung bis an den Rand des eigentlichen Kanal-Elektrodosen-Anteils dieser Kanal-Elektrodosenkombination.

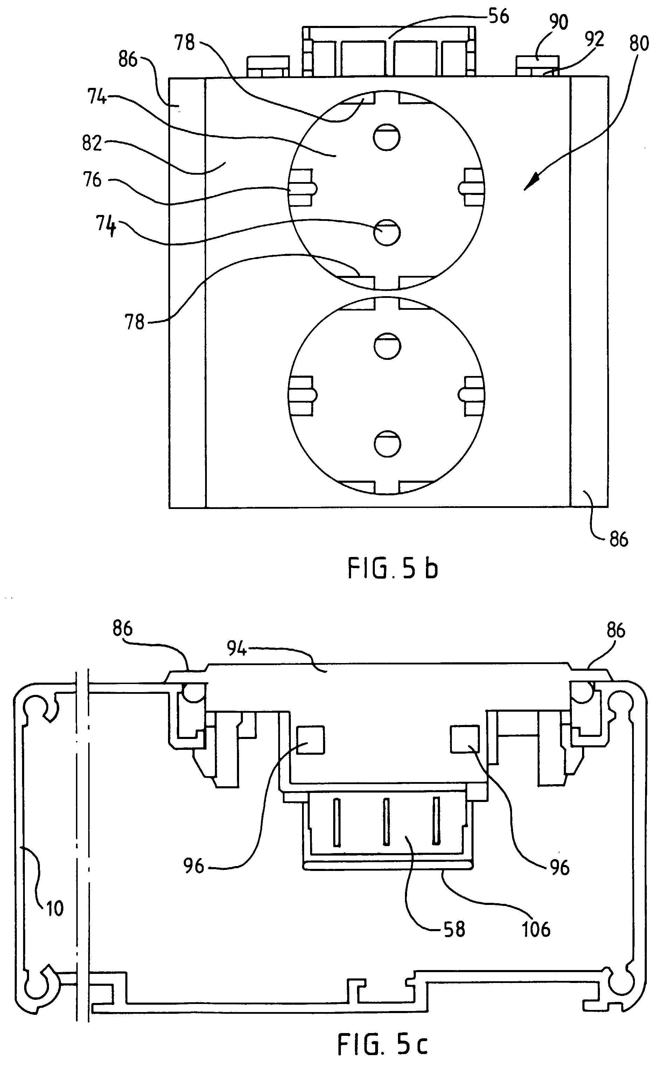

In Fig. 5 ist die in Fig. 1 und 2 vorkommende Doppel-Schutzkontakt-Sicherheits-Kanalsteckdose 80 ausführlicher dargestellt, die eine der häufigsten Kanal-Steckdosentypen ist. Die Kanal-Steckdose 80 weist folgende Teile auf: Geräteblende 82 mit zwei Schutzkontakt-Sicherheitssteckdosen 84 und einen Teil der Flanke der Abdeckung bildende Ränder 86, Endplatte 88 am Ableitungsende mit Befestigungsorganen 90, Ableitungsende 56, Endplatte 94 am Zuleitungsende mit Durchbrüchen 96, Zuleitungsende 58, Befestigungsorganen 100 sowie Bodenplatte 106.

Der einzige nach außen sichtbare Teil der Kanal-Steckdose ist die Geräteblende 82. Die Geräteblende 82 weist zwei Schutzkontakt-Sicherheitssteckdosen 84 auf. Die Steckeröffnungen 74 dieser Schutzkontakt-Sicherheitssteckdosen 84 und entsprechend sowohl die Schutzkontakte 76 aus Metall als auch die Führungsschlitze 78 sind in der Geräteblende 82 derart angeordnet, daß die Steckeröffnungen 74 im wesentlichen parallel zur Längserstreckung des Elektrokanals 10 liegen. Hierbei ist es leicht, mehrere sog. Winkelstecker 98 mit benachbarten Steckdosen zu kuppeln. Die dem Elektrokanal 10 zugewandten Ränder 86 der Geräteblende 82 sind auf unterschiedlicher Höhe gegenüber der übrigen Oberfläche der Geräteblende 82 und bilden somit einen Teil der Flanke der Frontplatte der Kanal-Steckdose 80. Die Geräteblende 82 ist ein Bestandteil der Kanal-Steckdose. Die Kanal-Steckdose 80 ist derart konstruiert, daß sie abgesehen von den männlichen, also elektrischen Strom empfangenden Kontaktgliedern, rundherum elektrisch berührungssicher ist, wodurch sie im Elektrokanal ohne separate Schutzdose installiert werden kann. Das andere, ableitungsseitige Ende 80 der Kanal-Steckdose wird durch das Strom speisende Ableitungsende 56 mit den oben beschriebenen weiblichen elektrischen Kontaktgliedern 66 sowie durch die ableitungsseitigen Endplatte 88 gebildet, die an sich bekannte, von der Stirnfläche 88 im wesentlichen abstrebende klauenförmige Befestigungsorgane 90 zur mechanischen Kupplung der Kanal-Elektrodosen miteinander aufweist. Die Befestigungsorgane 90 weisen Befestigungsöffnungen 92 für die männlichen Befestigungsorgane der Kopfleiste 110 auf. Das ableitungsseitige Ende 56 strebt wesentlich von der ableitungsseitigen Stirnfläche 88 ab. Das andere, zuleitungsseitige Ende der Kanal-Steckdose 80 wird durch die zuleitungsseitige Endplatte 94 sowie das Zuleitungsende 58 gebildet, das die bereits beschriebenen männlichen Kontaktglieder 70 aufweist. Die zuleitungsseitige Endplatte 94 weist Durchbrüche 96 auf. Wie oben bereits beschrieben wurde, hintergreifen die Befestigungsorgane 54 des Anschlußteils 20 bei der mechanischen Kupplung von Anschlußteil 20 und Kanal-Steckdose 80 die zuleitungsseitige Endplatte 94 und rasten in den darin angeordneten Durchbrüchen 96 ein, wodurch sie ihrerseits verhindern, daß sich der Anschlußteil 20 von dieser benachbarten Kanal-Steckdose löst. Außer dieser mechanischen Kupplung werden die obengennanten Teile auch an einer anderen Stelle, nämlich in der Nähe von Ableitungsende 56 und Zuleitungsende 58 mechanisch miteinander verbunden. Bei dieser mechanischen Verbindung greift der am Ableitungsende 56 angeordnete Schutzkragen 68 in Befestigungsnuten 72 am Zuleitungsende ein. Die entstandene mechanische Verbindung wird somit sehr stabil, und es wird verhindert, daß sich die benachbarten Teile der Kanal-Elektrodosenkombination, in diesem Fall also der Anschlußteil 20 und die Kanal-Steckdose 80 relativ zueinander im Elektrokanal bewegen. Bei mechanischer Kupplung von zwei Kanal-Steckdosen miteinander hinterfaßt wiederum die zuleitungsseitige Endplatte 94 die klauenförmigen Befestigungsorgane 90 an der ableitungsseitigen Endplatte 94 und anderseits, wie bei der Kupplung von Anschlußteil 20 und Kanal-Steckdose 80, greift der am Ableitungsende 56 angeordnete Schutzkragen 68 in die Befestigungsnuten 72 am Zuleitungsende 58 ein. Die entstandene mechanische Verbindung wird auch in diesem Fall sehr stabil, und die Bewegung von benachbarten Kanal-Steckdosen relativ zueinander im Elektrokanal wird verhindert.

Die zum Elektrokanal parallelen Außenflanken der Kanal-Elektrodose 80 weisen Befestigungsorgane 100 zur mechanischen Fixierung der Kanal-Steckdose im Elektrokanal 10. Die Zunge 102 und der daran angeordnete Anschlag 104 werden eingedrückt, wenn die Kanal-Steckdose in den Elektrokanal hineingesetzt wird. Nach dem Passieren der Ränder des einwärts gebogenen Teils der Vorderwandung des Elektrokanals werden Zunge 102 und Anschlag 104 entspannt und verrastet, wobei die Kanal-Steckdose lagerichtig eingesetzt ist. Die untere Seite der Geräteblende 82 dient als Anlagefläche für die Vorwerwandung des Elektrokanals und verhindert, daß die Kanal-Steckdose, wenn sie eingesetzt ist, tiefer in den Elektrokanal hineintaucht. Der Anschlag 104 funktioniert nach dem Entspannen der Zunge 102 und des daran angeordneten Anschlags 104 seinem Namen nach als Anschlag für den Rand des einwärts gebogenen Abschnitts von Vorderwandung des Elektrokanals und verhindert, daß sich die Kanal-Steckdose vom Elektrokanal löst. Beim Hineindrücken von Zunge 102 z.B. mit einem Schraubenzieher kann die Kanal-Steckdose 80 leicht aus dem Elektrokanal entrastet werden. Die Bodenplatte 106 ist ein Bestandteil der kompakten Kanal-Steckdose und bildet den Boden der Kanal-Steckdose und deckt von der Bodenseite her die in der Kanal-Steckdose liegenden spannungsführenden Teile. Die Bodenplatte 106 kann in der Kanal-Steckdose z.B. lösbar bzw. so befestigt werden, daß sie nach dem Zusammenbau der Kanal-Steckdose nicht gelöst werden kann.

Die Kanal-Elektrodosen lassen sich mit an sich bekannten sog. Snap-on-Gliedern ohne Werkzeuge im Elektrokanal befestigen, und die Kanal-Elektrodosen können aus dem Elektrokanal leicht z.B. mit einem Schraubenzieher ausgehoben werden. Die Kanal-Elektrodosen können auch mit bekannten Methoden z.B. des Snap-on-Typs, des sog. Schwalbenschwanz-Typs oder entsprechenden Gliedern sowohl aneinander als auch an dem getrennten Anschlußteil ohne Werkzeug befestigt werden. Die Kanal-Elektrodosen können auch voneinander, vom Elektrokanal und dem Anschlußteil leicht z.B. mit einem Schraubenzieher gelöst werden.

Durch die verschiedenen Elemente dieser Kanal-Steckdose, z.B. durch ihre passende Positionierung, ist z.B. folgendes sehr allgemeine Problem gelöst. Es ist z.B. aus der Patentanmeldung FI 872247 bekannt, in einem Elektrokanal Kanal-Steckdosen einzusetzen, wobei die Steckeröffnungen 74 im wesentlichen rechtwinklig zur Längserstreckung des Elektrokanals angeordnet sind. Es ist schwierig, oft sogar unmöglich, mehr als zwei der ziemlich gebräuchlichen Winkelstecker 98 an einer aus zwei solchen Steckdosen gebildeten Gesamtheit zu kuppeln. Bei diesem Steckertyp ist das Kabel von der Seite her, am häufigsten in einem Winkel von 90 ° gegenüber den Kontaktstiften angeschlossen. Bei solchen Steckern 98 ist die Anschlußstelle des Kabels am Stecker in einem Winkel von ca. 90° gegenüber der von den Kontaktstiften gebildeten Linie. Wenn mehr als zwei solcher Stecker 98 an benachbarten Kanalsteckdosen aufgesteckt werden sollen, wo die Steckeröffnungen 74 im wesentlichen rechtwinklig zur Längserstreckung des Elektrokanals angeordnet sind, können die äußersten Stecker dabei natürlich nur so gekuppelt werden, daß deren Kabel von den Steckdosen weg zeigen. Bei den zwischen den äußersten Steckdosen liegenden Winkelsteckern 98 ist man gezwungen, die Anschlußstelle des Kabels z.B. mit Gewalt nach oben zu verbiegen, um solch einen Stecker an die Steckdose anschließen zu können. Bisweilen hilft auch diese, die Kabelanschlußstelle des Steckers leicht beschädigende Maßnahme nicht, sondern man ist auf andere Lösungen angewiesen, wie etwa den Einsatz von Verlängerunsschnuren oder Mehrfach-Verlängerunssteckdosen, welche Alternativen nicht unbedingt einfach und oft auch vom Äußeren her nicht ästhetisch sind. Die nach dem Anwendungsbeispiel dieser Erfindung angeordneten, in diesem Fall also dem Elektrokanal im wesentlichen parallelen Steckeröffnungen 74 von Kanal-Steckdosen ermöglichen eine bessere Funktionsgerechtigkeit einer aus mehr als zwei benachbarten Steckdosen gebildeten Gesamtheit, wenn an sie z.B. Winkelstecker gekuppelt werden. Hierbei sind die Anschlußkabel der obengenannten Winkelstecker jeweils sauber und sachgemäß nach unten gerichtet. Die in Verbindung mit dieser Erfindung benutzte Lösung bietet für das oben angeführte Problem somit eine leicht realisierbare Lösung, die ein ästhetisches Endergebnis liefert.

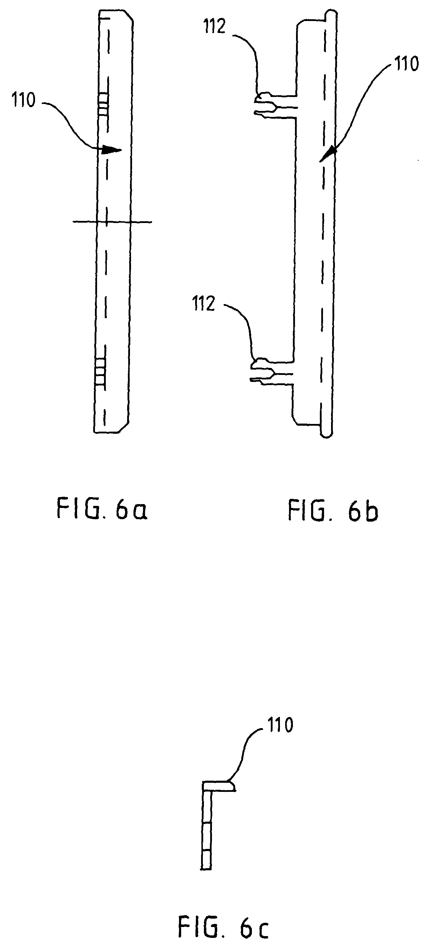

Die in Fig. 6 und 1 dargestellte Kopfleiste 110 bildet ihrer Bezeichnung gemäß den Kopfteil der Abdeckung 108 der Kanal-Elektrodosenkombination. Wenn die Kanal-Elektrodosenkombination gemäß dem Beispiel, bestehend allein aus dem Anschlußteil 20 + Kanal-Steckdosen 80, im Elektrokanal 10 installiert ist, bilden die seitlichen Ränder des aus dem Elektrokanal hervorspringenden Teils der Kanal-Steckdose, der Geräteblende 82, ihren Teil von der Flanke der Abdeckung 108 der Kanal-Elektrodosenkombination. Wenn der Anschlußteil 20 der Kanal-Elektrodosenkombination und alle Kanal-Steckdosen 80 installiert sind, werden an den Stirnseiten der Kanal-Elektrodosenkombination, an dem einen Ende in den Befestigungsöffnungen 92 der Kanal-Steckdose und dem anderen Ende an den Befestigungsorganen 50 des Anschlußteils die Kopfleisten 110 angebracht, die somit die von den Rändern der Kanal-Steckdosen gebildeten Flanken der Abdeckung zu einem lückenlosen und ästhetischen Ganzen vervollständigen. Die Kopfleisten 110 lassen sich ohne Werkzeuge mit geeigneten, an sich bekannten vorzugsweise männlichen Befestigungsorganen 112 anbringen und leicht, z.B mit der Hand lösen. Die Kopfleisten 110 sind identisch, was bedeutet, daß bei Kanal-Elektrodosenkombination jedes beliebigen Typs zur Bildung der Abdeckung 108 lose Teile eines einzigen Typs, nämlich Kopfleisten 110 benötigt werden, die der Elektroinstallateur leicht z.B. in der Brusttasche mitführen kann.

Um eine saubere Abdeckung zu erhalten, setzt es natürlich voraus, daß alle Kanal-Elektrodosen so installiert sind, daß sie im Elektrokanal dicht aneinander gehalten werden, damit keine unästhetischen Lücken in der Abdeckung enstehen würden. Dieser Anforderung kann wiederum auf mehreren verschiedenen Weisen entstprochen werden, wie etwa so, daß die Kanal-Elektrodosen passende Organe zu deren mechanischer Kupplung aneinander aufweisen, wobei zwischen den Kanal-Elektrodosen keine störenden Lücken entstehen können. An den einwärts gebogenen Rändern des Elektrokanals 10 sind z.B. Haltenuten 14 eingearbeitet. An den Teilen der Kanal-Elektrodosenkombination sind entsprechend Halteglieder 48 angeordnet, die in die genannten Haltenuten eingreifen und damit verhindern, daß sich die betreffende Kanal-Elektrodose und die übrigen damit gekuppelten Kanal-Elektrodosen im Elektrokanal, in dessen Längsrichtung bewegen.

Die Kanal-Elektrodosen einer Kanal-Elektrodosenkombination brauchen nicht unbedingt mechanisch miteinander gekuppelt zu werden. Es genügt, wenn sie auf die eine oder andere Weise lückenlos aneinander gehalten werden. Die an den Stirnseiten der Kanal-Elektrodosenkombination anzubringenden Kopfleisten sind von der Form her identisch. Lediglich die bei den Elektrodosen verwendeten verschiedenen Farbalternativen haben Unterschiede im Aussehen der Kopfleisten zur Folge. Die einerseits durch getrennte Kopfleisten und anderseits durch die Flanken der Kanal-Elektrodosen gemeinsam gebildete Abdeckung läßt sich mühelos und sauber installieren, benötigt wenig Teile und bietet eine sehr kostengünstige Weise, verschiedene Abdeckungsalternativen zu bilden.

Bei der Beschreibung eines Ausführungsbeispiels der Kanal-Elektrodosenkombination, nämlich der getrennten Teile einer in Fig. 1 bis 6 dargestellten aus zwei Doppel-Schutzkontakt-Sicherheits-Kanalsteckdosen 80 und einem getrennten Anschlußteil 20 gebildeten Kanal-Elektrodosenkombination ist es bereits klargeworden, daß die Kanal-Steckdosen und die damit gekuppelten Teile passende Befestigungsorgane zur Durchführung der mit der Kanal-Elektrodose verbundenen mechanischen Installationen, wie etwa werkzeuglosen Befestigung von Kanal-Elektrodose, Installationsgeräten, Geräteteilen, Schutzdekkeln und Abdeckungen usw. aufweisen.

Bei der erfindungsgemäßen Lösung kann mittels der dargestellten Glieder auf eine einfache und effektive Weise viele, ziemlich ärgerliche, mit den oben genannten bekannten Lösungen verbundene installationstechnisch nachteilige Faktoren aus der Welt geschaffen werden. Bei der erfindungsgemäßen Lösung wird als Versorgungskabel somit bevorzugt ein fünfadriges Versorgungskabel mit verwendet. Zum Beispiel bei der sog. Erstinstallation wird das aus der Gruppenzentrale verlegte fünfadrige Versorgungskabel im Elektrokanal an den Anschlußteil der nächsten Kanal-Elektrodosenkombination angeschlossen, wobei für die Bedürfnisse der betreffenden Kanal-Elektrodosenkombination aus diesem fünfadrigen Versorgungskabel die benötigten drei Leiter, nämlich der Nulleiter, Schutzerde und z.B. Phase L₁ verzweigt werden. Die Phasen L₂ und L₃ werden an die restlichen zwei zum Fortschalten geeigneten Anschlußklemmen gelegt. An diese fünf zum Fortschalten geeigneten Klemmen wird dann das zur nächsten Kanal-Elektrodosenkombination zu verlegende fünfadrige Versorgungskabel angeschlossen, das wiederum an den Anschlußteil der im Elektrokanal als nächste liegenden Kanal-Elektrodosenkombination angeschlossen wird. Wenn z.B. bei der ersten Kanal-Elektrodosenkombination das für die L₁-Phase festgelegte Belastungsmaximum erreicht worden ist, werden bei diesem Anschlußteil der in der Reihenfolge zweiten Kanal-Elektrodosenkombination aus dem von der ersten Kanal-Elektroinstallationsgruppe verlegten fünfadrigen Versorgungskabel Nulleiter, Schutzerde und die eine der bisher unbenutzten Phasen, z.B. Phase L₂ angeschlossen. Die Phasen L₁ und L₃ werden an die restlichen zwei zum Fortschalten geeigneten Klemmen angeschlossen. Auf diese Weise wird, die Phasen bei Bedarf abwechselnd, bis zur Beendigung der Installationsarbeit forgefahren oder bis das Maximum der Belastbarkeit dieses eingesetzten fünfadrigen Versorgungskabels erreicht ist. Die Anschlußteile dienen somit, außer als Zuleitungsstelle für die Stromversorgung der betreffenden Kanal-Elektrodosenkombination auch als Fortschaltstelle für das zu den nächsten Kanal-Elektrodosenkombinationen zu verlegende fünfadrige Kabel. Je nach der Situation, wenn z.B. bekannt ist, daß in einer bestimmten Kanal-Elektroinstallationsgruppe später entweder zusätzliche Kanal-Elektrodosen benötigt werden oder aber an die bereits existierenden Kanal-Elektrodosen leistungsmäßig größere Vorrichtungen angeschlossen werden, empfiehlt es sich, die Auslastung der Belastbarkeit einer jeden Phase L₁ bis L₃ bereits im voraus genau zu überlegen, um diese künftigen Nachinstallationen zu erleichtern oder um eine Zunahme der Belastung ohne zusätzliche Maßnahmen zu ermöglichen. Es ist selbstverständlich klar, daß es sich ansonsten lohnt, das Maximum der Belastbarkeit einer jeden Phase bereits in der Erstinstallationsphase auszuschöpfen, wenn keine großen Veränderungsbedürfnisse vorauszusehen sind. Falls/wenn bei einem bestimmten Elektrokanal die bereits genannte Notwendigkeit von Zusatzinstallationen oder eine zusätzliche Mehrbelastung durch Geräteveränderungen im nachhinein vorkommt, bieten die durch die Glieder der erfindugsgemäßen Kanal-Elektrodosenkombination ermöglichten Anwendungsalternativen eine flexible und leichte Weise, diesen neuen Bedürfnissen zu entsprechen. Wenn die Auslastung der verschiedenen Phasen im voraus richtig geplant ist, erfordern z.B. die neuen zusätzlichen Kanal-Steckdosen oder sonstige mäßige Mehrbelastungen keine Veränderungen des bestehenden Stromversorgungssystems. Hierbei lassen sich z.B. die neuen Kanal-Elektrodosen mit den erfindungsgemäßen zur Kanal-Elektrodose gehörenden Gliedern elektrisch an die bereits vorhandenen Kanal-Elektrodosenkombinationen leicht, ohne Werkzeuge oder getrennte Leiterstücke anschließen. Lediglich die Verkürzung der Frontplatte des Elektrokanals ist mit etwas Arbeit verbunden. Sollte es aber geschehen, daß z.B. bei irgendeiner an die Phase L₁ angelegten Kanal-Elektrodosenkombination Bedarf für zusätzliche Kanal-Steckdosen entstehen würde oder an die existierenden Installationsgeräte effektivere Vorrichtungen angeschlossen würden, wobei die maximale Belastbarkeit von Phase L₁ überschritten würde, die Phase L₃ aber noch über Belastungsreserve verfügen würde, kann das betreffende, ziemlich ärgerliche Problem bei einer aus erfindungsgemäß konstruierten Kanal-Elektrodosenkombinationen zusammengesetzten Installationsgesamtheit ziemlich einfach behoben werden. Die Gesamtbelastbarkeit des verwendeten fünfadrigen Versorgungskabels ist dann also ausreichend. Nur die Belastung an den verschiedenen Phasen ist zu ungleichmäßig. In der Praxis ist die Gesamtbelastbarkeit eines fünfadrigen Versorgungskabels so groß, daß bei einem einzelnen Elektrokanal die obere Grenze der Gesamtbelastung für diese dreiphasige Gruppe nur ziemlich selten erreicht wird; beispielsgemäße Anforderungen, die zu leiterbezogenen Belastungsüberschreitungen führen würden, können dagegen sehr wohl eintreffen. Dieses Problem läßt sich dadurch lösen, daß die in den Anschlußteilen von verschiedenen Kanal-Elektrodosenkombinationen bereits vorhandenen Leiter, natürlich nur die Phasenleiter L₁ bis L₃ derart neuorganisiert werden, daß die Belastungen zwischen den verschiedenen Phasen auf für jeden Leiter passende Niveaus angeglichen werden. Dabei wird also kein zusätzliches Kabel benötigt, und es ist nicht notwendig, den Elektrokanal bis zur Gruppenzentrale zu öffnen. Eigentlich braucht man die Frontplatte des Elektrokanals nur am Anschlußteil einer jeden Kanal-Elektrodosenkombination zur Durchführung der obigen ziemlich einfachen Änderungsarbeiten zu öffnen. Die erfindungsgemäße Kanal-Elektrodosenkombination weist geeignete Glieder auch zur Durchführung dieser Arbeit ohne unnötigen Aufwand, weil sich die Kopfleisten der Abdekkung mühelos entfernen lassen und die Frontplatte des Elektrokanals am Anschlußteil leicht geöffnet werden kann. Nach den Änderungsarbeiten können die obengenannten Teile leicht in den Elektrokanal wieder eingebaut werden.

Es sei auch betont, daß bei Verwendung von erfindungsgemäßen Kupplungsgliedern mit 5 Anschlußklemmen an sämtlichen Phasen der dreiphasigen Versorgung, d.h. an den Phasen L₁, L₂ und L₃ dieselben 0- und Erdungsleiter eingesetzt werden können. Durch die Verwendung eines einzigen fünfadrigen Versorgungskabels auf eine durch die erfindungsgemäßen Stromversorgungsorgane ermöglichte Weise kann einer in einem Elektrokanal installierten aus mehreren Kanal-Elektrodosenkombinationen zusammengesetzten Gesamtheit dieselbe Versorgungsleistung zugeführt werden, die bei einer bei Elektrokanal-Installationen gebräuchlichen Weise drei dreiadrige Versorgungskabel voraussetzen würde. Die durch die Erfindung erzielten Vorteile bei der Stromversorgung von in einem Elektrokanal installierten Kanal-Elektrodosenkombinationen sowie bei Erstinstallationen und im besonderen beim Nachrüsten sind somit ziemlich offensichtlich.

Eine Kanal-Elektrodosenkombinationen, die als Kanal-Elektrodosen nur Kanal-Steckdosen gemäß dem Beispiel hat, ist selbstverständlich nur eine der erfindungsgemäßen Ausführungsformen. Eine erfindungsgemäße Kanal-Elektrodosenkombination läßt sich ja aus einem separaten Anschlußteil + mindestens einer Kanal-Elektrodosenkombination oder einem fest zu einer Kanal-Elektrodose gehörenden Anschlußteil und daran eventuell gekuppelten Kanal-Elektrodosen bilden. Wie oben bereits beschrieben wurde, versteht man unter Kanal-Elektrodose zahlreiche alternative in einem Elektrokanal installierbare Elektrozubehörgegenstände wie etwa Kanal-Steckdosen, diverse Installationsgeräte und Vorrichtungen ohne getrennte Schutz dose, verschiedene in Schutzdosen eingesetzte Installationsgeräte und Vorrichtungen, wie Steckdosen, Schalter, Anschlußklemmen für Tele-, Telefon- und Datenübertragungsverbindungen und anderes ähnliches Elektrozubehör.

Bei der oben beschriebenen Erfindung handelt sich um eine Lösung für installationstechnische Probleme in hinsicht auf die derzeitigen Elektrokanäle. Die Erfindung bietet auch völlig neue, vielseitige Alternativen zur Installation von Kanal-Elektrodosenkombinationen, und zwar so, daß das Endergebnis hinsichtlich der Fertigungs- und Installationskosten günstig und ästhetisch brauchbar ist. Obwohl oben nur eine vorteilhafte Ausführungsformen der Erfindung detailliert beschrieben ist, läßt sich die Erfindung im Rahmen des durch die Patentansprüche festgelegten Erfindungsgedanken anwenden.

## Patentansprüche

1. In einem rinnenförmigen Elektrokanal (10) zu installierende elektrische Kanal-Elektrodosenkombination mit mindestens einer Kanal-Elektrodose (80) oder dergleichen und Anschlußteilen (20, 28), die Kanal-Elektrodose (80) umfassend geeignete Befestigungsorgane (90, 100) zur deren Befestigung im Elektrokanal (10), wobei
- für eine werkzeuglose mechanische und elektrische Kupplung von mehreren gleichartigen Kanal-Elektrodosen (80) untereinander bzw. für eine werkzeuglose mechanische und elektrische Kupplung der Kanal-Elektrodosen (80) mit Anschlußteilen (20) ein mit elektrischen Kontaktgliedern (66) und mit einem Schutzkragen (68) versehenes Ableitungsende (56) und ein mit elektrischen Kontaktgliedern (70) und mit einer seitlich angeordneten Befestigungsnut (72) versehenes Zuleitungsende (58) vorgesehen ist, und
- bei der Kupplung von Kanal-Elektrodosen (80) und Anschlußteilen (20) die elektrischen Kontaktglieder (66) und die Ränder des Schutzkragens (68) am Ableitungsende (56) einer Kanal-Elektrodose (80) bzw. eines Anschlußteils (20) in die elektrischen Kontaktglieder (70) und Befestigungsnuten (72) des Zuleitungsendes (58) der benachbarten Elektrodosen (80) bzw. Anschlußteilen (20) greifen.

2. Kanal-Elektrodosenkombination nach Anspruch 1,
**dadurch gekennzeichnet, daß**
der Schutzkragen (68) die durch die elektrischen Kontaktglieder (66, 70) gebildete Verbindung seitlich und unten umgibt.

3. Kanal-Elektrodosenkombination gemäß Anspruch 1 oder 2,
**dadurch gekennzeichnet, daß**
die elektrischen Kontaktglieder (66, 70) als Kontaktglieder des Messertyps, des Gabeltyps oder dergleichen ausgebildet sind.

4. Kanal-Elektrodosenkombination nach Anspruch 1,
**dadurch gekennzeichnet, daß**
die Befestigungsorgane (90) Befestigungsöffnungen (92) für männliche Befestigungsorgane (112) der Kopfleiste (110) aufweisen.

5. Kanal-Elektrodosenkombination nach einem oder mehreren der vorgenannten Ansprüche,
**dadurch gekennzeichnet, daß**
mindestens ein Teil der Kombination Kanal-Elektrodose/Elektrokanal geeignete Befestigungsorgane (14, 48) zur Verhinderung einer Bewegung der Kanal-Elektrodose (80) im Elektrokanal (10) in dessen Längserstreckung aufweist.

6. Kanal-Elektrodosenkombination nach einem oder mehreren der vorgenannten Ansprüche,
**dadurch gekennzeichnet, daß**
die Kanal-Elektrodose (80) des weiteren wenigstens eine Kopfleiste (110) umfaßt, die im installierten Zustand der Kanal-Elektrodose (80) an deren Stirnseiten angeordnet ist und zusammen mit zum Elektrokanal (10) parallelen Rändern (86) der Elektrodose (80) eine Abdeckung (108) bildet.

7. Kanal-Elektrodosenkombination nach einem oder mehreren der vorgenannten Ansprüche,
**dadurch gekennzeichnet, daß**
daß diese ein getrenntes Anschlußteil (20) besitzt, das geeignete Verbindungsglieder (46) zur Zuleitung von elektrischem Strom zur Kanal-Elektrodosenkombination aufweist.

8. Kanal-Elektrodosenkombination nach einem oder mehreren der vorgenannten Ansprüche,
**dadurch gekennzeichnet, daß**
mindestens eine Kanal-Elektrodose (80) ein integriertes Anschlußteil (28) besitzt, das geeignete Verbindungsglieder (46) zur Zuleitung von elektrischem Strom zur Kanal-Elektrodosenkombination aufweist.

9. Kanal-Elektrodosenkombination nach einem oder mehreren der vorgenannten Ansprüche,
**dadurch gekennzeichnet, daß**
die Verbindung zwischen den verschiedenen Teilen (20, 80; 28, 80; 80, 80) elektrisch berührungsgeschützt ist.

10. Kanal-Elektrodosenkombination nach Anspruch 9,
**dadurch gekennzeichnet, daß**
die Teile (20, 28,80) der Kanal-Elektrodosenkombination mit Ausnahme der Zuleitungsorgane (70) für den elektrischen Strom rundherum berührungsgeschützt sind.

11. Kanal-Elektrodosenkombination gemäß Anspruch 9 oder 10,
**dadurch gekennzeichnet, daß**
das Anschlußteil (20; 28) fünf zur Fortschaltung geeignete Anschlußklemmen (46) sowie ein Zugentlastungsglied (24) für die Zuleitung und für eine eventuelle Ableitung aufweist, durch welche Teile bei der Kanal-Elektrodose außer der gewöhnlichen einphasigen Versorgung (Phase, Null und Schutzerde) auch eine dreiphasige Versorgung (L₁, L₂, L₃, Null und Schutzerde) und deren Abwechslung zwischen den verschiedenen Kanal-Elektrodosen eine gewöhnliche einphasige Versorgung erhält.

12. Kanal-Elektrodosenkombination gemäß Anspruch 7,
**dadurch gekennzeichnet, daß**
das getrennte Anschlußteil (20) passende Befestigungsorgane (54, 40; 42; 44, 26; 62, 50) für die mit dem getrennten Anschlußteil (20) verbundenen mechanischen Installationen, wie Befestigung des getrennten Anschlußteils (20) an der Kanal-Elektrodose (80), werkzeuglosen Befestigung des Schutzdeckels (60), des Oberteils (30) der Zugentlastungsvorrichtung, der Kopfleiste (110) usw. aufweist.

13. Kanal-Elektrodosenkombination gemäß Anspruch 8,
**dadurch gekennzeichnet, daß**
das integrierte Anschlußteil (28) passende Befestigungsorgane (40; 42; 44, 26; 62, 50, 90; 92) für die mit dem integrierten Anschlußteil (28) verbundenen mechanischen Installationen, wie werkzeuglosen Befestigung des Schutzdeckels (60), des Oberteils (30) der Zugentlastungsvorrichtung, Kopfleiste (110) usw. aufweist.

14. Kanal-Elektrodosenkombination nach einem oder mehreren der vorgenannten Ansprüche,
**dadurch gekennzeichnet, daß**
die Kanal-Elektrodosenkombination und die damit zu kuppelnden Teile passende Befestigungsvorrichtungen für sämtliche mit diesen Teilen verbundenen mechanischen Installationen, wie etwa werkzeugloser Befestigung von Kanal-Elektrodosen, Anschlußteilen, Installationsgeräte, Geräteteilen, Schutzdeckeln, Zugentlastungsorganen, Abdeckplatten usw. aufweisen.

15. Kanal-Elektrodosenkombination nach einem oder mehreren der vorgenannten Ansprüche,
**dadurch gekennzeichnet, daß**
die Kanal-Elektrodose (80) bzw. der getrennte Anschlußteil (20) eine Bodenplatte (106) umfaßt, die die in der Kanal-Elektrodose (80) bzw. in dem Anschlußteil (20) liegenden spannungsführenden Teile von der Bodenseite her berührungssicher abdeckt.

16. Kanal-Elektrodosenkombination nach Anspruch 15,
**dadurch gekennzeichnet, daß**
die Bodenplatte (106) lösbar oder fest an der Kanal-Elektrodose (80) bzw. dem Anschlußteil (20) angebracht ist.

## Claims

1. Electrical duct and power socket combination to be installed in a channel-like electrical duct (10), with at least one duct power socket (80) or the like and terminal members (20, 28), encompassing the duct power socket (80) suitable fastening members (90, 100) for fastening thereof in the electrical duct (10), wherein
- for tool-less mechanical and electrical coupling of several identical duct power sockets (80) to each other or for tool-less mechanical and electrical coupling of the duct power sockets (80) to terminal members (20), a discharge end (56) provided with electrical contact members (66) and with a protective collar (68) and a supply end (58) provided with electrical contact members (70) and a laterally arranged fastening groove (72) are provided, and
- on coupling duct power sockets (80) and terminal members (20), the electrical contact members (66) and the edges of the protective collar (68) at the discharge end (56) of a duct power socket (80) or of a terminal member (20) engage in the electrical contact members (70) and fastening grooves (72) of the supply end (58) of the adjacent power sockets (80) or terminal members (20).

2. Duct and power socket combination according to claim 1, characterised in that the protective collar (68) surrounds at the sides and bottom the connection formed by the electrical contact members (66, 70).

3. Duct and power socket combination according to claim 1 or 2, characterised in that the electrical contact members (66, 70) are designed as contact members of the blade type, fork type or the like.

4. Duct and power socket combination according to claim 1, characterised in that the fastening members (90) comprise fastening openings (92) for male fastening members (112) of the head strip (110).

5. Duct and power socket combination according to one or more of the above claims, characterised in that at least a portion of the combination of duct power socket and electrical duct comprises suitable fastening members (14, 48) for preventing movement of the duct power socket (80) in the electrical duct (10) in the longitudinal extent thereof.

6. Duct and power socket combination according to one or more of the above claims, characterised in that the duct power socket (80) further includes at least one head strip (110) which when the duct power socket (80) is installed is arranged at the end faces thereof and, together with edges (86) of the power socket (80) parallel to the electrical duct (10), forms a cover (108).

7. Duct and power socket combination according to one or more of the above claims, characterised in that it has a separate terminal member (20) which comprises suitable connecting members (26, 46) for supply of the duct power socket with electrical current.

8. Duct and power socket combination according to one or more of the above claims, characterised in that at least one duct power socket (80) has an integrated terminal member (28) which comprises suitable connecting members (26, 46) for supply of the duct power socket with electrical current.

9. Duct and power socket combination according to one or more of the above claims, characterised in that the connection between the various components (20, 80; 28, 80; 80, 80) is protected against electrical contact.

10. Duct and power socket combination according to claim 9, characterised in that the components (20, 28, 80) of the duct and power socket combination with the exception of the supply members (70) for the electrical current are protected against contact all round.

11. Duct and power socket combination according to claim 9 or 10, characterised in that the terminal member (20; 28) comprises five terminals (46) suitable for continuous switching as well as a strain relief member (24) for supply and for possible discharge, by which parts with the duct power socket an ordinary single-phase supply obtains, apart from the ordinary single-phase supply (phase, neutral and earth), a three-phase supply (L₁, L₂, L₃, neutral and earth) and alternation thereof between the different duct power sockets.

12. Duct and power socket combination according to claim 7, characterised in that the separate terminal member (20) comprises mating fastening members (54, 40; 42; 44, 26; 62, 50) for the mechanical installations connected to the separate terminal member (20), such as fastening of the separate terminal member (20) to the duct power socket (80), tool-less fastening of the protective cover (60), the upper portion (30) of the strain relief device, the head strip (110), etc.

13. Duct and power socket combination according to claim 8, characterised in that the integrated terminal member (28) comprises mating fastening members (40; 42; 44, 26; 62, 50, 90; 92) for the mechanical installations connected to the integrated terminal member (28), such as tool-less fastening of the protective cover (60), the upper portion (30) of the strain relief device, the head strip (110), etc.

14. Duct and power socket combination according to one or more of the above claims, characterised in that the duct and power socket combination and the components to be coupled therewith comprise mating fastening devices for all mechanical installations connected to these components, such as perhaps tool-less fastening of duct power sockets, terminal members, installation equipment, equipment parts, protective covers, strain relief members, cover plates, etc.

15. Duct and power socket combination according to one or more of the above claims, characterised in that the duct power socket (80) or the separate terminal member (20) includes a bottom plate (106) which covers the live parts located in the duct power socket (80) or in the terminal member (20) from the bottom side to prevent contact.

16. Duct and power socket combination according to claim 15, characterised in that the bottom plate (106) is mounted releasably or stationarily on the duct power socket (80) or the terminal member (20).

## Revendications

1. Combinaison de prises de courant électrique pour conduit électrique, à installer dans un conduit électrique (10) en forme de gouttière, comportant au moins une prise de courant électrique pour conduit (80) ou similaire et des pièces de raccordement (20, 28), la prise électrique pour conduit (80) comprenant des organes de fixation appropriés (90, 100) en vue de sa fixation dans le conduit électrique (10), dans laquelle
- pour un accouplement mécanique et électrique sans outil de plusieurs prises de courant électrique pour conduit (80) identiques les unes aux autres, ou pour un accouplement mécanique et électrique sans outil des prises de courant électrique pour conduit (80) avec des pièces de raccordement (20), il est prévu une extrémité de transfert (56), dotée d'éléments de contact électrique (66) et d'un collet de protection (68), ainsi qu'une extrémité d'alimentation (58) dotée d'éléments de contact électrique (70) et d'une rainure de fixation (72) disposée latéralement, et
- lors de l'accouplement de prises de courant électrique pour conduit (80) et de pièces de raccordement (20), les éléments de contact électrique (66) et les bords du collet de protection (68) à l'extrémité de transfert (56) d'une prise électrique pour conduit (80) ou d'une pièce de raccordement (20) s'engagent dans les éléments de contact électrique (70) et des rainures de fixation (72) de l'extrémité d'alimentation (58) des prises de courant électrique (80) ou des pièces de raccordement (20) voisines.

2. Combinaison de prises de courant électrique pour conduit selon la revendication 1, caractérisée en ce que le collet de protection (68) entoure latéralement et par le dessous la liaison formée par les éléments de contact électrique (66, 70).

3. Combinaison de prises de courant électrique pour conduit selon la revendication 1 ou 2, caractérisée en ce que les éléments de contact électrique (66, 70) sont configurés comme éléments de contact du type à lame, du type à fourche ou similaires.

4. Combinaison de prises de courant électrique pour conduit selon la revendication 1, caractérisée en ce que les organes de fixation (90) présentent des ouvertures de fixation (92) pour des organes de fixation mâles (112) de la languette de face (110).

5. Combinaison de prises de courant électrique pour conduit selon l'une ou plusieurs des revendications précédentes, caractérisée en ce qu'au moins une partie de la combinaison prise électrique pour conduit/conduit électrique présente des organes de fixation (14, 48) appropriés pour empêcher un déplacement de la prise électrique pour conduit (80) dans le conduit électrique (10), dans la direction longitudinale de celui-ci.

6. Combinaison de prises de courant électrique pour conduit selon l'une ou plusieurs des revendications précédentes, caractérisée en ce que la prise électrique pour conduit (80) comporte en outre au moins une languette de face (110) qui, lorsque la prise électrique pour conduit (80) est installée, est disposée sur les côtés frontaux de celle-ci, et forme avec des bords (86) de la prise électrique (80), parallèles au conduit électrique (10), un recouvrement (108).

7. Combinaison de prises de courant électrique pour conduit selon l'une ou plusieurs des revendications précédentes, caractérisée en ce qu'elle possède une pièce de raccordement (20) séparée, qui présente des organes de liaison (26, 46) appropriés pour l'alimentation en courant électrique de la combinaison de prises de courant électrique pour conduit.

8. Combinaison de prises de courant électrique pour conduit selon l'une ou plusieurs des revendications précédentes, caractérisée en ce qu'au moins une prise électrique pour conduit (80) possède une pièce de raccordement (28) intégrée qui présente des organes de liaison (26, 46) pour l'alimentation en courant électrique de la combinaison de prises de courant électrique pour conduit.

9. Combinaison de prises de courant électrique pour conduit selon l'une ou plusieurs des revendications précédentes, caractérisée en ce que la liaison entre les différentes parties (20, 80; 28, 80; 80, 80) est protégée vis-à-vis d'un contact.

10. Combinaison de prises de courant électrique pour conduit selon la revendication 9, caractérisée en ce que les parties (20, 28, 80) de la combinaison de prises de courant électrique pour conduit sont, à l'exception des organes d'alimentation (70) en courant électrique, protégées périphériquement contre les contacts.

11. Combinaison de prises de courant électrique pour conduit selon la revendication 9 ou 10, caractérisée en ce que la pièce de raccordement (20; 28) présente cinq griffes d'alimentation (46) convenant pour la prolongation du branchement ainsi qu'un organe de reprise des contraintes de traction (24) pour l'alimentation et pour un transfert éventuel, pièces grâce auxquelles, dans la prise de courant électrique pour conduit, une alimentation monophasée habituelle comprend, en plus de l'alimentation monophasée habituelle (phase, neutre et terre de protection), une alimentation triphasée (L₁, L₂, L₃, neutre et terre de protection), et sa répartition entre les différentes prises de courant électrique pour conduit.

12. Combinaison de prises de courant électrique pour conduit selon la revendication 7, caractérisée en ce que la pièce de raccordement séparée (20) présente des organes de fixation adaptés (54, 40; 42; 44, 26; 62, 50) pour les dispositifs mécaniques reliés à la pièce de raccordement (20) séparée, tels qu'une fixation de la pièce de raccordement séparée (20) à la prise électrique pour conduit (80), une fixation sans outils du couvercle de protection (60), de la partie supérieure (30) du dispositif de reprise des contraintes de traction, de la languette de face (110), etc.

13. Combinaison de prises de courant électrique pour conduit selon la revendication 8, caractérisée en ce que la pièce de raccordement intégrée (28) présente des organes de fixation adaptés (40; 42; 44, 26; 62, 50, 90; 92) pour les dispositifs mécaniques reliés à la pièce de raccordement (28) intégrée, tels qu'une fixation sans outils du couvercle de protection (60), de la partie supérieure (30) du dispositif de reprise des contraintes de traction, de la languette de face (110), etc.

14. Combinaison de prises de courant électrique pour conduit selon l'une ou plusieurs des revendications précédentes, caractérisée en ce que la combinaison de prises de courant électrique pour conduit et les pièces à accoupler avec elle présentent des dispositifs de fixation adaptés pour des dispositifs mécaniques reliés à ces pièces, telles qu'une fixation sans outil de prises de courant électrique pour conduit, de pièces de raccordement, d'appareils d'installation, de parties d'appareils, de couvercles de protection, d'organes de reprise de contraintes de traction, de plaques de recouvrement, etc.

15. Combinaison de prises de courant électrique pour conduit selon l'une ou plusieurs des revendications précédentes, caractérisée en ce que la prise électrique pour conduit (80) ou la pièce de raccordement séparée (20) comprend une plaque de fond (106) qui recouvre du côté du fond et de manière protégée contre les contacts les parties conduisant la tension qui sont situées dans la prise électrique pour conduit (80) ou dans la pièce de raccordement (20).

16. Combinaison de prises de courant électrique pour conduit selon la revendication 15, caractérisée en ce que la plaque de fond (106) est installée de manière libérable ou fixe sur la prise électrique pour conduit (80) ou sur la prise de raccordement (20).
